# EUROPEAN PATENT SPECIFICATION

(11) **EP 3 755 900 B1**
(45) Date of publication and mention of the grant of the patent: **16.04.2025**
(21) Application number: 19733163.0
(22) Date of filing: 01.03.2019
(51) Int. Cl.: F03D 3/00, F03D 3/02, F03D 3/04, F03D 3/06

(54) **VERTICAL WIND TURBINE**
VERTIKALE WINDTURBINE
ÉOLIENNE VERTICALE

(30) Priority: 01.03.2018 RO 201800143
(43) Date of publication of application: 30.12.2020
(73) Proprietor: Stroie, Dumitru, Darmanesti (RO)
(72) Inventor: Stroie, Dumitru, Darmanesti (RO)
(74) Representative: Fierascu, Cosmina-Catrinel
(86) International application number: PCT/RO2019/000006
(87) International publication number: WO 2019/172792

(56) References cited:
- CN-A- 106 545 464
- DE-A1- 19 526 129
- US-A1- 2012 119 692
- US-A1- 2016 084 222

## Description

### TECHNICAL FIELD

The invention refers to a vertical wind turbine preferably used for an efficient collecting of the low-intensity atmospheric air currents that have a slower speed than 1-2m/s, unsteady or in gusts of wind that exist at a lower height above the soil, adapted to units that consume electrical energy in the urban environment or the countryside.

### BACKGROUND

There is presently a global demand for developing sustainable, environmentally friendly alternative energy systems. Wind energy has become one of the preferred alternative resources, leading to recent technological progress in this domain, like for instance high efficiency turbines.

Two types of wind turbines are known:
- with a rotor with horizontal axis and
- with a rotor with a vertical axis.

Wind turbines with vertical axis rotor offer more advantages comparing with the conventional design of the rotor with horizontal axis.

The wind turbines with vertical axis are split into two categories:
- Darrieus-type turbines and
- Savonius-type turbines.

The Savonius turbines have a pretty low efficiency, 14% in comparison with the Darrieus wind turbines which have the efficiency of 32%. The simplicity of building a wind turbine becomes often more important than its efficiency.

A major advantage of the vertical axis wind turbines is that they are omni-directional, which means they can catch the wind energy from all directions.

However, there is a disadvantage, namely the negative torque induced on the blades that work against the direction of the airflow at the end of the full rotation.

The Savonius wind turbine is usually provided with a rotor with two or three cups. Due to the curvature, the cups oppose less resistance when they rotate against the direction of the wind than when they rotate in the direction of the wind. The difference of the traction' determines the rotation of the Savonius turbine. Because they are sliding devices, the Savonius turbines extract much less wind power than those lift-type turbines with similar dimensions. A big area of a Savonius rotor's curved surface can be near the soil, which makes the total energy extraction less effective because of the wind's slower speed at lower heights. The Savonius turbines are used whenever the costs or the reliability are more important than efficiency.

The Darrieus-type wind turbine is made of a number of curved blades, mounted on a framework or a vertical rotating shaft. The blades' curvature allows their surface to become stressed in tension only on high rotational speeds. The blades are arranged in a symmetrical way and in the way that they have a zero angle of maneuver, meaning the angle that the blades have in relation with the structure on which they are mounted on. This arrangement has the same level of efficiency no matter from where the wind blows. One of the design's problems is that the angle of attack modifies as the turbine spins so that every blade generates the maximum torque at two points on its cycle, front and back of the turbine. This leads to a sinusoidal (pulsing) power cycle that complicates the design. Most of the Darrieus turbines have mechanical brakes or other speed control devices that complicate the construction of the turbine even more.

The document US 2016/084222 A1 describes an omni-directional wind power harnessing device is disclosed. The device of the present invention includes a platform, a rotary mechanism and an output shaft. The platform has a plurality of channeling ducts, which are circumferentially provided around the platform. Therefore, wind blowing in any direction may be channeled into the platform. Each of the vanes has an arc shape and the vanes are circumferentially provided around the rotary mechanism with a tilted angle to prompt the rotary mechanism to rotate.

The document US 2012/119692 A1 discloses a power generator generates electric power by using sunlight and wind force which are clean energies, and in particular a power generator of a hybrid type which is characterized in that electric power is mainly generated by using sunlight at daytime when it is sunny, and electric power can be alternatively generated by using wind force when there is not sunshine in case of a rainy weather or a cloudy weather or when wind is strong, so it is possible to generate electric power all the time by using sunlight and wind at both daytime and nighttime and sunny and cloudy weathers.

### TECHNICALPROBLEM

One of the objectives of this invention is to overcome the above mentioned disadvantages by creating a vertical wind turbine which ensures increased efficiency while having at the same time a light, simple low-cost construction that can be easily adapted to units that consume electrical energy in the urban and rural environments. Another objective of this invention is to ensure that the turbines' blades are oriented towards the wind's direction in order to catch and efficiently direct the atmospheric airflow with the help of a minimum torque.

### DESCRIPTION

The above mentioned problems are overcome by providing a vertical wind turbine as defined in claim 1 of the present invention.

Additional characteristics of the present invention are defined in the corresponding dependent claims.

The object of the present invention is a vertical wind turbine that comprises:
- at least one reel with a superior circular basis and an inferior circular basis arranged parallel and the centers on a central axis of the reel, spaced from one another, the said reel being divided into a multitude of m rows, perpendicularly and uniformly arranged on the whole height of the reel and delimited by a plurality of circular separation elements with the centers on the central axis of the reel,
   - each row from the plurality of the reel's m rows having a number n of blades that forms a blade assembly Pn,
      - each blade from the same row has a S-shaped profile d and the height equal with the height of the associated row, and the S-shaped profile d has two portions, the convex portion d1 and, respectively the concave portion d2 oriented in the direction of the rotation of the reel, with the convex portion d1 fixed on at least one of the separation element and oriented towards the central axis of the reel and the concave portion d2 fixed on at least one of the separation element oriented towards the exterior of the reel,
      - each blade from the same row being with 360/n degrees spaced apart from the neighboring blade; and
      - the blade assembly on each row being with a number of degrees higher than zero and lower than 360/n spaced apart from the assembly on the row(s) next to it;
- at least one cylinder hermetically sealed positioned on the direction of the central axis of said at least one reel and concentric with it, having a smaller diameter than the diameter of the reel, and
- a vertical support provided with a pivot head on which said at least one reel is fixed, in a pivoting manner in relation with said support and on the direction of the central axis of the reel.

In the context of the present invention, each reel has a superior circular basis and an inferior circular basis, disposed in a parallel manner, the reel's central axis passes through the centers of the two bases. The distance between the inferior circular basis and the superior circular basis represents the reel's height.

On the direction of the reel's central axis and concentric with it is also positioned at least one hermetically sealed cylinder, having the diameter smaller than the reel's diameter, preferably, the diameter of said at least one hermetically sealed cylinder representing at most one third of the reel's diameter.

In a first preferred embodiment of the invention, said at least one hermetically sealed cylinder forms an assembly of hermetically sealed cylinders consisting of a number m of hermetically sealed cylinders, concentric with the reel and overlapping; each of them corresponding to one blade row. Each hermetically sealed cylinder is provided with charging and respectively, discharging valves for gas.

At the same time, concentric with the reel and perpendicular on the external surface of said at least one hermetically sealed cylinder are provided a plurality of circular separation elements, their role being to delimit several rows of the reel. For example, the first row is formed between the inferior circular basis and the first element of separation, the second row is formed between the first and the second row of separation and so on like this until the last row, formed between the last element of separation and the superior circular basis of the reel. The hermetically sealed cylinder has its circular bases positioned on the central axis of the reel as well.

Each row is provided with a number n of blades forming thus an assembly of blades, (Pn), associated with the respective row. Preferably, number n is higher or equal with three, or more preferably it is higher or equal with six, for example each row is provided with eight blades. Each blade has a S-shaped profile with two portions, one convex portion and one concave portion, taking into consideration the direction of rotation of the reel. Preferably, the two portions have equal dimensions. The convex portion is oriented towards the central axis of the reel and the concave portion is oriented towards the exterior of the reel. The concave portion lies in the extension of the convex portion, so that the profile of each blade takes the shape of letter S. The length of a blade's S-shaped profile, in the context of the present invention, represents the entire length defined by the difference between the reel's radius and the hermetically sealed cylinder's radius.

Each blade has the height substantially equal with the height of the row on which it is positioned. More specifically, when two separation elements define a row where there is an assembly of blades, the distance between those two separation elements represents the height of the respective row. In that same way, the height of the first row is given by the distance between the inferior circular basis and the first separation element and the height of the last row is given by the distance between the last separation element and the superior circular basis.

Each blade on the same row is 360/n degrees spaced apart from the neighboring blade, where n represents the number of blades on the corresponding row. For example, when there are eight blades on a row, each one of them is 45 degrees spaced apart from the blade next to it.

The blade assembly on each row is spaced apart with a number of degrees higher than zero and lower than 360/n from the assembly on the neighboring row/rows. In a first preferred embodiment, the assembly of the blades on a row is 360/2n degrees spaced apart from the neighboring assembly of the row/rows.

### ADVANTAGES OF THE INVENTION

The advantages of the vertical wind turbine according to the invention are:
- it can function during low speed wind, at least 1-2m/s irrespective of its direction or intensity;
- the S shape of each blade ensures the increase of the turbine engine's torque, at the same wind speed because the air currents are concentrated in the concave portion on the blade's exterior extremity;

- a continuous and linear turbine rotation movement is ensured due to the fact that the blades are spaced apart from each other and operate in stages, similar to the way a thermal engine works in three stages: intake when air accumulates, compression when maximum air concentration is produced and evacuation occurs when the air pressure is released;
- each cylinder from the assembly of hermetically sealed cylinders contains a compressed gas which is lighter than the air which leads to the increase of the turbine's functioning efficiency, reducing both the gravitational force and the friction force between the turbine and the air;
- light and simple construction;
- reduced production costs;
- works in extreme conditions of temperature and variations in wind speed thanks to the system formed by the permanent magnet assembly and the coil assembly;
- due to the low heights at which it functions, the anchoring and fastening installation of the wind turbine occupies less space/terrain surface;
- the maintenance is easier because the components are placed at a lower height;
- reduced noise;
- it is capable of collecting the air currents along the reel's height even if they have different speeds.

### BRIEF DESCRIPTION OF THE DRAWINGS

Other advantages and characteristics are going to be clearer from the following description, for the preferred embodiments which do not limit the scope of the protection, of a vertical wind turbine in conformity with the invention, with reference to the drawings wherein:
- Figure 1 represents a perspective view of the vertical wind turbine with two reels in a first preferred embodiment according to the invention, view from the guiding element (the exit area of the air currents);
- Figure 2 represents a perspective view of the vertical wind turbine with two reels in a first preferred embodiment, view from the deflector assembly (the admission area of the air currents);
- Figure 3 represents a frontal view of the vertical wind turbine with two reels in a first preferred embodiment;
- Figure 4 represents a lateral view of the vertical wind turbine with two reels in a first preferred embodiment;
- Figure 5 represents a top view of the vertical wind turbine with two reels in a first preferred embodiment;
- Figure 6 represents a perspective view of the wind turbine with one reel in a second preferred embodiment.

### DETAILED DESCRIPTION

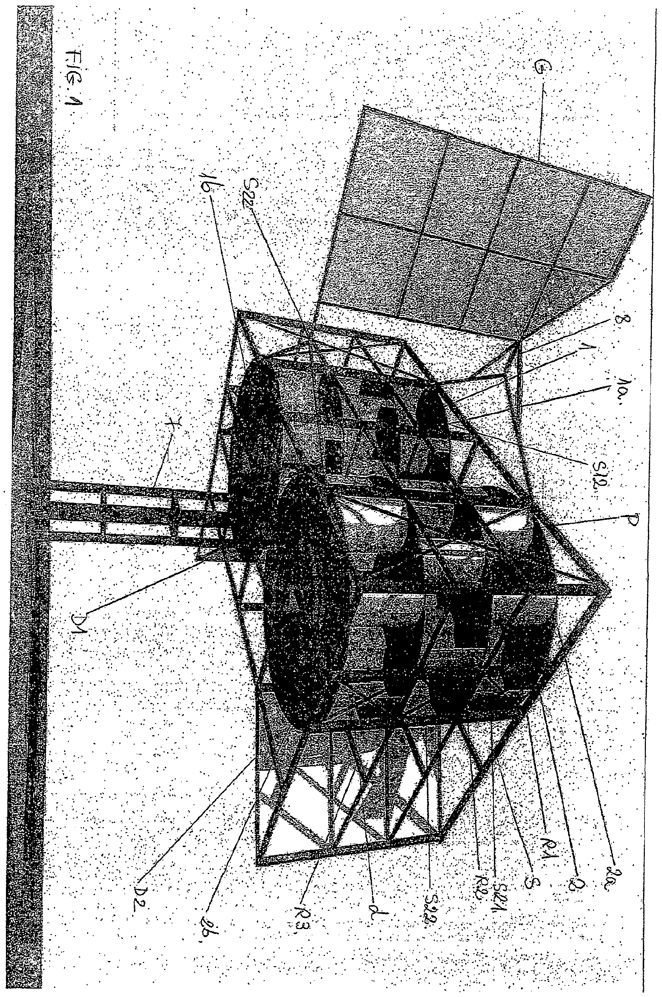

Referring to figure 1, the reels (1, 2) according to the invention are cylindrical pieces preferably with disc-shaped ends, having a superior circular basis (1a, 2a) and an inferior circular basis (1b, 2b).

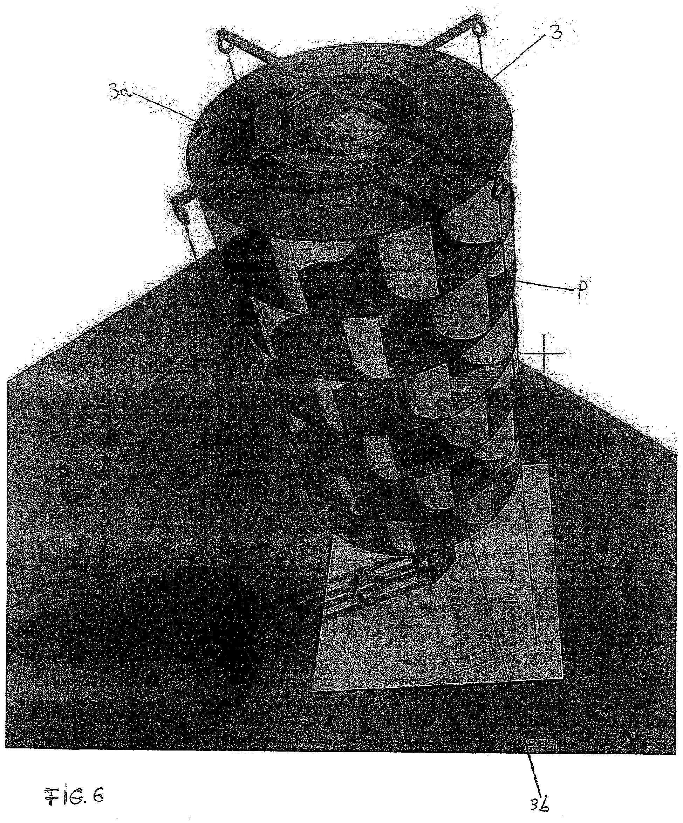

Each reel (1, 2, 3) rotates around its own central axis (Y1, Y2, Y3) (not shown). In the second preferred embodiment presented in figure 6, the central axis (Y3) of the reel (1, 2, 3) may coincide with the turbine's central axis.

Concerning figure 1 as well, each reel (1, 2) is divided into a plurality of rows (R1, R2, R3... Rm) arranged perpendicularly and uniformly along the reel's (1, 2) height and delimitated by a multitude of circular separation elements (S11, S12; S21, S22;... Sm) that are concentric with the basis (1a, 2a, 1b, 2b) of the respective reel (1, 2). The separation elements (S11, S12; S21, S22;... Sm) divide the reel (1, 2, 3) in several rows (R1, R2, R3... Rm) of equal heights. For example, the first row is formed between the inferior circular basis of the reel and the first separation element, the second row is formed between the first and second separation elements and so on until the last row, formed between the last separation element and the superior circular basis of the reel. Preferably, the number m is a multiple of number three.

On the reel's (1, 2, 3) central axis direction and concentric with it there is positioned at least one hermetically sealed cylinder, which has the separation elements (S11, S12; S21, S22;... Sm) fixed on its exterior surface. In order to ensure the turbine's optimal functioning, the diameter of said at least one hermetically sealed cylinder is smaller than the reel's (1, 2, 3) diameter, preferably the diameter of said cylinder is at most one third of the reel's (1, 2, 3) diameter.

In the second preferred embodiment, figure 6, the said at least one hermetically sealed cylinder forms an assembly of hermetically sealed cylinders comprising a number m of hermetically sealed cylinders, concentric with the reel (1, 2, 3) and overlapping, one for each corresponding row (R1, R2, R3... Rm). Each hermetically sealed cylinder has gas charging and discharging valves (13a, 13b).

Each hermetically sealed cylinder contains a non explosive compressed gas which is lighter than the air, which leads to an increase in the turbine's functioning efficiency, reducing both the gravitational force and the friction force between the turbine and the air, ensuring at the same time a light construction and a more precise positioning of the turbine while functioning.

The non explosive compressed gas is preferably argon, neon or helium.

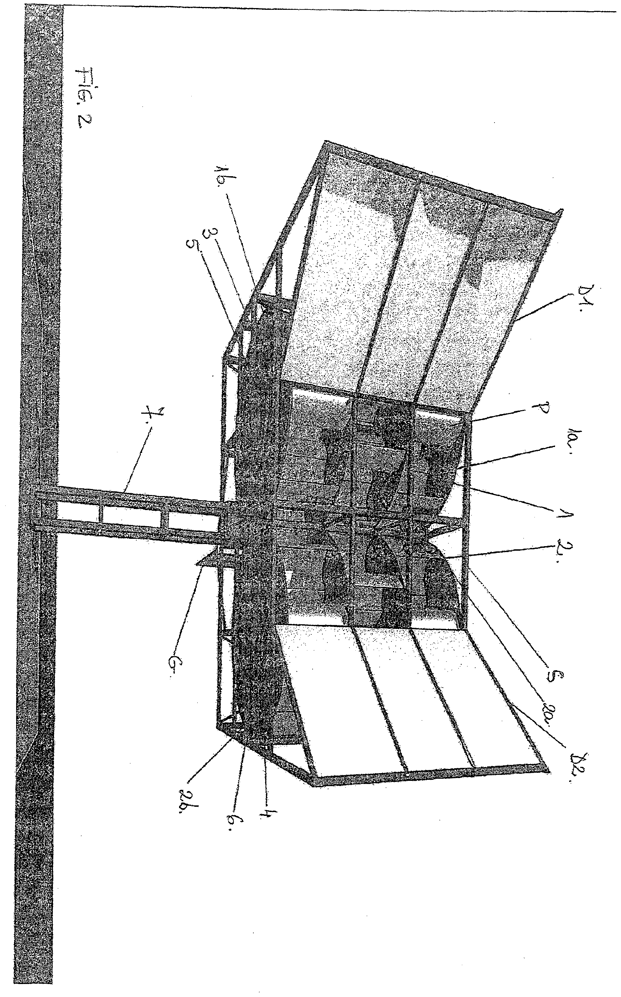

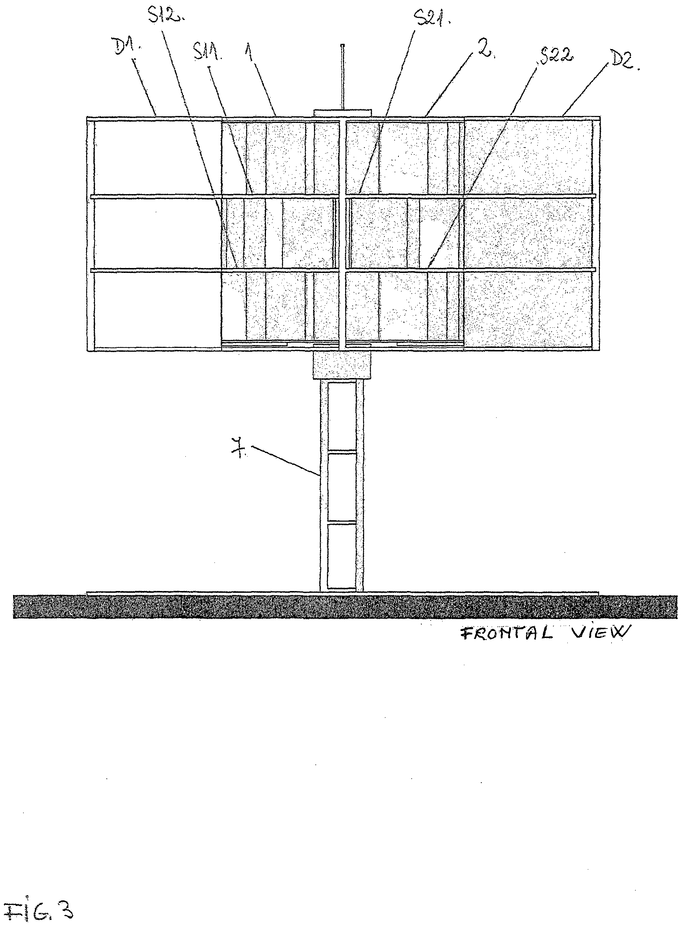

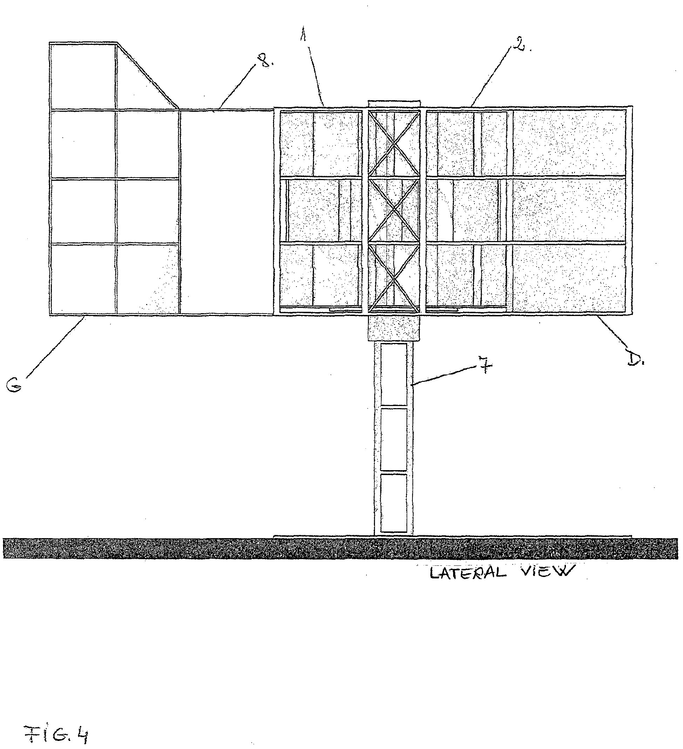

Referring to the figures 2, 3 and 4, the turbine according to the invention comprises two reels (1, 2) and additionally a chassis (S), with a frontal, a posterior and two lateral sides, a superior and an inferior side wherein the reels (1, 2) are mounted inside the chassis (S) and spaced from every said side of the chassis (S).

The chassis (S) is preferably made of metallic bars fixed between themselves, preferably by welding, thereby forming a rigid framework.

At the same time, the reels (1, 2) are mounted inside the chassis (S), with the possibility to rotate around their own axes (Y1, Y2), preferably through connecting and bearing means. The connection means of the chassis (S) can be threaded assemblies.

The reels (1, 2) are spaced from each side of the chassis (S), with a distance determined by the oscillation given both while functioning at high wind speeds and by the reel's (1, 2) height and by the thickness of the material of the blades assembly (Pn) provided on each reel (1, 2). Each reel (1, 2) is connected by some connection means (10a, 10'a, 10b, 10'b) (not shown), positioned between the superior side of the chassis (S) and the superior basis (1a, 2a) of each reel (1, 2) and respectively between the inferior side of the chassis (S) and the inferior basis (1b, 2b) of each reel (1, 2), each of them with the possibility of rotation around its own central axis (Y1, Y2), perpendicular on the superior (1a, 2a) and inferior (1b, 2b) basis of the reels (1, 2) and which connects the centers of their respective basis (1a, 2a, 1b, 2b), in opposite direction one from the other towards a separating plane between the two reels (1, 2). Preferably, the connection means (10a, 10'a, 10b, 10'b) may be an assembly of oscillating bearings with guides, dimensioned to take over both the specific task for the reel's (1, 2) weight and the centrifugal force generated by the reel's (1, 2) rotation.

The axis of each bearing from said assembly is provided at the end with a screwing top. This top rotates on an adjustable plate to decompress the bearings, reducing the friction surface and thus increasing the turbine's efficiency.

The connection means (10a, 10'a, 10b, 10'b) can be mounted onto the chassis (S) by screwing assemblies on a fixed metal plate, for example, by welding to chassis (S), the chassis being strengthened and reinforced in that area.

The central axis (Y1, Y2) of the two reels (1, 2) are parallel with each other, vertical and spaced apart so that the superior (1a, 2a) basis and the superior (1b, 2b) basis of the reels (1, 2) are at a predefined minimum distance (dmin) against the splitting plane between the two reels (1, 2). Preferably, the distance (dmin) between the reels (1, 2) has to be sufficiently wide so as to avoid the collision between the two reels (1, 2) while functioning, but not as wide as to reduce the turbine's efficiency.

As it is presented in figures 2, 3 and 4, the turbine according to the invention in this first preferred embodiment comprises also a deflector assembly (D) containing a first deflector element (D1) and a second deflector element (D2), vertically and symmetrically fixed one to another, on the frontal side of the chassis (S) and having the same height as the chassis'(S) height, so that when functioning, it ensures the guiding of the air currents towards the blade assembly (Pn). The angle between each of the deflecting elements (D1) and respectively, (D2) and the separation plane of the two reels being at least 45 degrees. The mounting of the deflector assembly (D) leads to an increase in the rotation of both reels (1, 2) and the air currents are guided towards the concave portion (d2) of the blade assembly (Pn), increasing thus the turbine's efficiency.

The deflector elements (D1) and (D2) have, preferably, the same dimensions.

In this first preferred embodiment, the turbine further contains a guiding element (G) vertically fixed to the posterior side of the chassis (S) and having a higher height than the one of the chassis (S), fixed at a distance from the chassis (S) by means of a frame (8), the guiding element's plane (G) being substantially the same as the separation plane of the two reels.

The deflector assembly (D) and the guiding element (G) are preferably made of a light material, preferably aluminum, carbon fiber, layered wood, recyclable elements, for example: barrels, cans, plates, subassemblies, to provide a lightweight structure of the vertical wind turbine according to the invention.

Each row (R1, R2, R3... Rm) of the reel (1, 2, 3) is provided with the same number (n) of blades (Pn) forming the blade assembly (Pn).

Preferably, the number of blades (Pn) is higher or equal with three, more preferably higher or equal with six, for example, each row (R1, R2, R3... Rm) has eight blades (P).

Each blade (P) on the same row is 360/n degrees spaced apart from the neighboring blade and in a preferred embodiment the blade assembly (Pn) on each row (R1, R2, R2... Rm) being with a number of degrees higher than zero and lower than 360/n spaced apart from the assembly on the neighboring row/rows. Each blade has a profile (d) and the same height as the height of the associated row (R1, R2, R2... Rm).

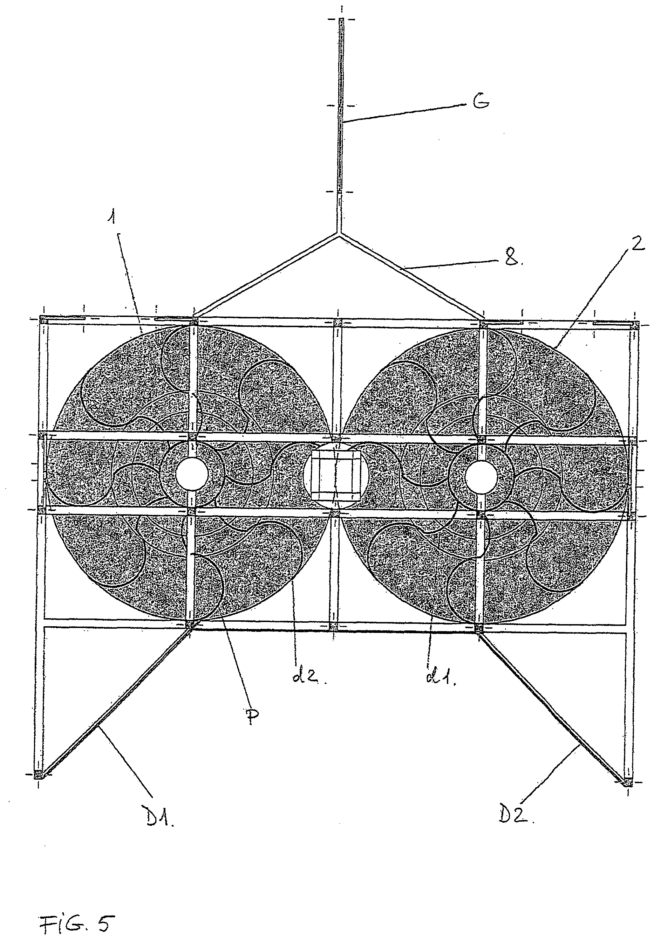

The profile (d) of every blade having the S shape, from the blade assembly (Pn), according to figure 5, has two portions, a convex portion (d1) and a concave portion (d2) with the convex portion (d1) fixed on at least one separation element (S11, S12; S21, S22;... Sm) and oriented towards the central axis (Y1, Y2, Y3) of the reel (1, 2, 3) and with the concave portion (d2) fixed on at least one separation element (S11, S12; S21, S22;... Sm) and oriented towards the reel's (1, 2, 3) exterior.

This profile allows the generation of a positive torque on the central axis of each reel (1, 2, 3), increasing thus the rotation speed, and the concave portion (d2) of every blade allows the functioning of the turbine even when the wind barely blows. At the same time, the S-shape of the profile (d) of each blade (P) ensures an increasing in the turbine engine torque, at the same speed of the wind, because the air currents are concentrated in the concave portion (d2) of the blade's (P) exterior extremity.

Another advantage of the blade's (P) profile is that it ensures a continuous and linear rotating motion due to the fact that the blades (P) are spaced apart one from another on each row (R1, R2, R3,.. .Rm), ensuring thus a functioning in stages similar to a thermal engine which functions in three stages: intake when air accumulates, compression when maximum air concentration is produced and evacuation occurs when the air pressure is released.

The blades of the assembly blades (Pn), can be made, preferably, of a light material such as aluminum, carbon fiber, layered wood.

The vertical wind turbine according to the invention may additionally comprise an assembly which transforms the reels' (1, 2, 3) rotation movement into electric energy using the permanent magnet assembly (4, 4') and the coils assembly (5, 6). The magnets (4, 4') are mounted on the inferior basis (1b, 2b, 3b) of each reel (1, 2, 3), having on an interior ring of the said reel the symmetrical axis concentric with the reel's (1, 2, 3) axis. The coils assembly (5, 6) is mounted in line with the magnets (4, 4'); the coils (5, 6) being preferably circular and having a ring-shaped emplacement fixed by elastic means (9a, 9b) on the inferior side of the reel (1, 2, 3). The magnet assembly presents preferably a plurality of permanent magnets (4, 4') and is circularly arranged with the changed polarity one near the other, oriented towards the coils' assembly (5, 6), fixed on the inferior basis (1b, 2b, 3b) of each reel (1, 2, 3) and concentric with the respective inferior basis (1b, 2b, 3b). The elastic means (9a, 9b) are preferably threaded assemblies with springs. Each coil from said coil assembly (5, 6) is arranged spaced apart and concentric with an associated magnet from said permanent magnet assembly (4, 4'). Each coil in said coil assembly (5, 6), preferably has the same diameter as the corresponding magnet in said magnet assembly (4, 4').

The coil and the permanent magnet assembly generate a variable entrefer and in this way the turbine does not need an additional braking system for the wind's high speeds because once the wind speed increases, the entrefer gets reduced, implicitly increasing the torque and the quantity of produced energy. The circular coil assembly (5, 6) fixed on the chassis slides parallel with the permanent magnet assembly (4, 4') depending on the speed and wind force thus generating an intensity of the electric energy that varies directly proportional with the wind intensity. The electric energy produced by the magnet/coil assembly can be transmitted to the consumers, to relays for loading and stabilizing, or for storage in batteries.

Moreover, the wind turbine according to the invention, according to figures 1, 2, 3, 4 or 6, can be placed on a vertical support (7) fixed on a site surface, the support (7) which has a pivot head and the role of sustaining and fixating the reel (1, 2, 3) on a surface so that the reel (1, 2, 3) can pivot in relation to the support (7) along the direction of its central axis (Y1, Y2, Y3).

At the same time, the reels (1, 2) are mounted on the chassis (S) in a rotating manner around its own axis, preferably by connecting means and bearing means. The connecting means to the chassis can be threaded assemblies.

The connection and bearing means (10a, 10'a, 10b, 10'b) of the reels to the chassis (S) are placed between the superior side of the chassis (S) and the superior circular basis (1a, 2a) of each reel and respectively between the chassis' inferior side and each reel's (1, 2) inferior circular basis (1b, 2b). These means ensure bearing by providing an assembly of oscillating bearings that take over the task specific of the weight as well as the centrifugal forces that appear when the reels are rotating. With reference to the first preferred embodiment of the vertical wind turbine, the chassis (S) is fixed on the support (7) so that the assembly made of the chassis (S), the magnet assembly (4, 4'), the coils assembly (5, 6), the reels (1, 2), the deflector assembly (D) and the guiding element (G) can pivot in relation to the support (7) along the direction of the central axis (Y1, Y2) and can rotate around the support's (7) vertical axis in order to capture the air currents. The support's vertical axis coincides with the turbine's vertical axis (Y1, Y2). On the other hand, the vertical support (7) can be fixed on the site surface through conventional means and can be anchored preferably by using tensed metallic cables, according to figure 6. The vertical wind turbine according to the invention is environmental-friendly as it can have on every external component a protection against birds such as a protective net.

Depending on the turbine's complexity, a controller may be provided (in order to see the instant energy production or the energy production on a predefined period of time) and a circuit that can interrupt current transfer from the turbine to the batteries in order to store it when the batteries are full and there is no consumption.

At the same time, the wind turbine of the invention can be used to exploit the air currents produced naturally or artificially.

The invention is not restricted to the above-described preferred embodiments which can be varied in a number of ways within the scope of the claims.

## Claims

1. The vertical wind turbine, comprising:
at least one reel (1, 2, 3) which:
- has a superior circular basis (1a, 2a, 3a) and an inferior circular basis (1b, 2b, 3b) arranged parallel and fixed along the central axis (Y1, Y2, Y3) through a hermetically sealed cylinder assembly,
- it is divided in a plurality of rows m (R1, R2, R3... Rm) arranged perpendicularly and uniformly along the total reel's height and delimitated by a plurality of circular separation elements (S11, S12; S21, S22;... Sm) that are concentric with the bases (1a, 2a, 1b, 2b),
- each row (R1, R2, R3... Rm) being provided with a number (n) of blades (P) that form an assembly of blades (Pn),
- each blade (P) has a S-shaped profile (d) and the height equal with the associated row's (R1, R2, R3... Rm) height and the S-shaped profile (d) has two portions, a convex (d1), respectively a concave one (d2) oriented towards the direction of the reel's rotation, with the convex portion (d1) fixed on at least one separation element (S11, S12; S21, S22;... Sm) and oriented towards the reel's central axis (Y1, Y2, Y3) and with the concave portion (d2) fixed on at least one separation element (S11, S12; S21, S22;... Sm) and oriented towards the reel's exterior,
- each blade (P) on the same row being 360/n degrees spaced apart from the neighboring blade; and
- the blade assembly (Pn) on each row being with a number of degrees higher than zero and lower than 360/n spaced apart from the assembly on the neighboring row/rows; and
- at least one hermetically sealed cylinder of the respective reel (1, 2, 3) positioned on the direction of the central axis (Y1, Y2, Y3) of said at least one reel (1, 2, 3) and concentric with it, said hermetically sealed cylinder having a smaller diameter than said reel's (1, 2, 3) diameter, and
- a vertical support (7) provided with a pivot head on which the reel (1, 2, 3) is fixed in a pivoting manner in relation to said vertical support (7) and along the direction of said reel's (1, 2, 3) central axis (Y1, Y2, Y3).

2. The vertical wind turbine according to claim 1, further comprising:
- an assembly configured to transform the reel's (1, 2, 3) rotation movement in electric energy, comprising:
- a ring shaped assembly comprising a plurality of circular coils (5, 6), fixed by some elastic means (9a, 9b) on the inferior side of the reel (1, 2, 3);
- a ring shaped assembly comprising a plurality of permanent magnets (4, 4') with the changed polarity, arranged circularly, next to each other, oriented towards the coil assembly (5, 6) fixed on the inferior basis (1b, 2b, 3b) of each reel (1, 2, 3) and concentric with said inferior basis (1b, 2b, 3b),
- each coil from said coil assembly (5, 6) being spaced apart and concentric respectively with an associated magnet from said magnet assembly (4, 4').

3. The vertical wind turbine according to claim 1, wherein every hermetically sealed cylinder contains a non explosive compressed gas, lighter than the air.

4. The vertical wind turbine according to claims 1 or 3, wherein the non explosive compressed gas is preferably argon, neon or helium.

5. The vertical wind turbine according to claims 1, 3 or 4, wherein each hermetically sealed cylinder is provided with two valves (13a, 13b), for charging and respectively, for discharging gas.

6. The vertical wind turbine according to any of the preceding claims, wherein the number of rows m is preferably a multiple of number three.

7. The vertical wind turbine according to any of the preceding claims, wherein each coil from said coil assembly (5, 6) has preferably the same diameter with the associated magnet from said magnet assembly (4, 4').

8. The vertical wind turbine according to any of the preceding claims, wherein the elastic means (9a, 9b) are preferably threaded assemblies with springs.

9. The vertical wind turbine according to any of the preceding claims, wherein the connection means (10a, 10'a, 10b, 10'b) of the reel (1, 2, 3) are preferably an assembly of oscillating bearings with guides.

10. The vertical wind turbine according to any of the preceding claims comprising one reel.

11. The vertical wind turbine according to the claims from 1 to 9, comprising two reels and additionally:
- a chassis (S) having a frontal side, a posterior side, two lateral sides, an inferior side and a superior side wherein the two reels are mounted inside the chassis, spaced apart from each said side of the chassis (S),
- a deflector assembly (D) containing a first deflector element (D1) and a second deflector element (D2), vertically fixed and symmetrical to each other, on the frontal side of the chassis (S) and having the height equal with the chassis' (S) height, so that, when functioning, to ensure the directing of the captured air currents towards the blade assembly (Pn), wherein
- the angle between each of the first deflector element (D1) and the second deflector element (D2) with the separation plane of the two reels is at least 45 degrees;
- a guiding element (G) vertically fixed on the chassis'(S) posterior side and having a higher height than the chassis (S) height, being fixed and spaced apart from the chassis (S) by a frame (8), the guiding element's (G) plane being substantially the same as the separation plane of the two reels.

12. The vertical wind turbine according to claim 11, wherein the blade assembly (Pn), the deflector assembly (D) and the guiding element (G) are preferably made from a light material, preferably aluminum, carbon fiber, layered wood, recyclable elements such as barrels, cans, plates, subassemblies.

13. The vertical wind turbine according to claims 11 or 12, wherein the guiding element (G) has a height of at least 20% higher than the chassis' (S) height, being beveled in the superior frontal side at an angle of at least 45 degrees.

14. The vertical wind turbine according to claims from 11 to 13, wherein the deflector elements (D1) and (02) have equal dimensions.

## Patentansprüche

1. Vertikale Windturbine, umfassend:
- mindestens eine Trommel (1, 2, 3), die:
- eine obere kreisförmige Basis (1a, 2a, 3a) und eine untere kreisförmige Basis (1b, 2b, 3b) aufweist, die parallel angeordnet und entlang der Mittelachse (Y1, Y2, Y3) durch eine luftdicht verschlossene Zylinderanordnung ortsfest angebracht sind,
- in eine Vielzahl von Reihen m (R1, R2, R3... Rm) unterteilt ist, die senkrecht und gleichmäßig entlang der Gesamthöhe der Trommel angeordnet und durch eine Vielzahl von konzentrisch zu den Basen (1a, 2a, 1b, 2b) angeordneten kreisförmigen Trennelementen (S11, S12; S21, S22;... Sm) begrenzt sind,
- wobei jede Reihe (R1, R2, R3... Rm) mit einer Anzahl (n) von Blättern (P) versehen ist, die eine Blätteranordnung (Pn) bilden,
- wobei jedes Blatt (P) ein S-förmiges Profil (d) und eine Höhe aufweist, die gleich der Höhe der zugehörigen Reihe (R1, R2, R3... Rm) ist, und das S-förmige Profil (d) zwei Abschnitte aufweist, und zwar einen konvexen (d1) bzw. einen konkaven (d2), die zur Drehrichtung der Trommel ausgerichtet sind, wobei der konvexe Abschnitt (d1) an mindestens einem Trennelement (S11, S12; S21, S22;... Sm) ortsfest angebracht ist und zur Mittelachse (Y1, Y2, Y3) der Trommel ausgerichtet ist und wobei der konkave Abschnitt (d2) an mindestens einem Trennelement (S11, S12; S21, S22;... Sm) ortsfest angebracht ist und zur Außenseite der Trommel ausgerichtet ist,
- wobei jedes Blatt (P) in der gleichen Reihe um 360/n Grad von dem benachbarten Blatt beabstandet ist; und
- wobei die Blätteranordnung (Pn) in jeder Reihe mit einer Anzahl von Grad größer als Null und kleiner als 360/n von der Anordnung in der/den benachbarten Reihe(n) beabstandet ist; und
- mindestens einen luftdicht verschlossenen Zylinder der jeweiligen Trommel (1, 2, 3), der in Richtung der Mittelachse (Y1, Y2, Y3) der mindestens einer Trommel (1, 2, 3) und konzentrisch zu dieser angeordnet ist, wobei der luftdicht verschlossene Zylinder einen kleineren Durchmesser als der Durchmesser der Trommel (1, 2, 3) aufweist, und
- einen vertikalen Träger (7), der mit einem Schwenkkopf versehen ist, auf dem die Trommel (1, 2, 3) schwenkbar in Bezug auf den vertikalen Träger (7) und in Richtung der Mittelachse (Y1, Y2, Y3) der Trommel (1, 2, 3) ortsfest angebracht ist.

2. Vertikale Windturbine nach Anspruch 1, ferner umfassend:
- eine Anordnung, die dazu ausgebildet ist, um die Drehbewegung der Trommel (1, 2, 3) in elektrische Energie umzuwandeln, umfassend:
- eine ringförmige Anordnung, die eine Vielzahl von kreisförmigen Spulen (5, 6) umfasst, die ortsfest durch einige elastische Mittel (9a, 9b) an der Unterseite der Trommel (1, 2, 3) angebracht sind;
- eine ringförmige Anordnung, die eine Vielzahl von Permanentmagneten (4, 4') mit geänderter Polarität umfasst, die kreisförmig nebeneinander angeordnet sind, auf die Spulenanordnung (5, 6) ausgerichtet sind, ortsfest an der unteren Basis (1b, 2b, 3b) jeder Trommel (1, 2, 3) und konzentrisch zu dieser unteren Basis (1b, 2b, 3b) angebracht sind,
- wobei jede Spule der Spulenanordnung (5, 6) mit einem Abstand und konzentrisch zu einem zugehörigen Magneten der Magnetanordnung (4, 4') angeordnet ist.

3. Vertikale Windturbine nach Anspruch 1, wobei jeder luftdicht verschlossene Zylinder ein nicht explosionsfähiges Druckgas enthält, das leichter als Luft ist.

4. Vertikale Windturbine nach Anspruch 1 oder 3, wobei das nicht explosionsfähige Druckgas vorzugsweise Argon, Neon oder Helium ist.

5. Vertikale Windturbine nach Anspruch 1, 3 oder 4, wobei jeder luftdicht verschlossene Zylinder mit zwei Ventilen (13a, 13b) zum Befüllen bzw. Entleeren von Gas versehen ist.

6. Vertikale Windturbine nach einem der vorhergehenden Ansprüche, wobei die Anzahl der Reihen m vorzugsweise ein Vielfaches der Zahl drei ist.

7. Vertikale Windturbine nach einem der vorhergehenden Ansprüche, wobei jede Spule der Spulenanordnung (5, 6) vorzugsweise den gleichen Durchmesser wie der zugehörige Magnet der Magnetanordnung (4, 4') hat.

8. Vertikale Windturbine nach einem der vorhergehenden Ansprüche, wobei die elastischen Mittel (9a, 9b) vorzugsweise mit Gewinde und Federn versehene Anordnungen sind.

9. Vertikale Windturbine nach einem der vorhergehenden Ansprüche, wobei die Verbindungsmittel (10a, 10'a, 10b, 10'b) der Trommel (1, 2, 3) vorzugsweise eine Anordnung von mit Führungen versehenen Pendellagerungen sind.

10. Vertikale Windturbine nach einem der vorhergehenden Ansprüche umfassend eine Trommel.

11. Vertikale Windturbine nach einem der Ansprüche 1 bis 9, umfassend zwei Trommeln und zusätzlich:
- ein Chassis (S) mit einer Vorderseite, einer Rückseite, zwei Lateralseiten, einer Unterseite und einer Oberseite, wobei die beiden Trommeln innerhalb des Chassis im Abstand von jeder der Seiten des Chassis (S) angebracht sind,
- eine Deflektoranordnung (D), die ein erstes Deflektorelement (D1) und ein zweites Deflektorelement (D2) enthält, die vertikal ortsfest und symmetrisch zueinander an der Vorderseite des Chassis (S) angebracht sind und eine Höhe aufweisen, die der Höhe des Chassis (S) entspricht, um im Betrieb die Lenkung der eingefangenen Luftströme auf die Blätteranordnung (Pn) zu gewährleisten, wobei
- der Winkel zwischen jedem des ersten Deflektorelements (D1) und des zweiten Deflektorelements (D2) mit der Trennebene der beiden Trommeln mindestens 45 Grad beträgt;
- ein Führungselement (G), das vertikal an der Rückseite des Chassis (S) ortsfest angebracht ist und eine größere Höhe als die Höhe des Chassis (S) aufweist, wobei es durch ein Gestell (8) am Chassis (S) befestigt und von diesem beabstandet ist, wobei die Ebene des Führungselements (G) im Wesentlichen die gleiche ist wie die Trennebene der beiden Trommeln.

12. Vertikale Windturbine nach Anspruch 11, wobei die Blätteranordnung (Pn), die Deflektoranordnung (D) und das Führungselement (G) vorzugsweise aus einem leichten Material, vorzugsweise Aluminium, Kohlefaser, Schichtholz, wiederverwertbaren Elementen wie Fässern, Dosen, Platten, Unteranordnungen, hergestellt sind.

13. Vertikale Windturbine nach Anspruch 11 oder 12, wobei das Führungselement (G) eine Höhe hat, die mindestens 20 % höher ist als die Höhe des Chassis (S), und an der oberen Vorderseite in einem Winkel von mindestens 45 Grad abgeschrägt ist.

14. Vertikale Windturbine nach einem der Ansprüche 11 bis 13, wobei die Deflektorelemente (D1) und (D2) gleiche Abmessungen aufweisen.

## Revendications

1. L'éolienne verticale, comprenant :
- au moins un tambour (1, 2, 3) qui :
- possède une base circulaire supérieure (1a, 2a, 3a) et une base circulaire inférieure (1b, 2b, 3b) disposées parallèlement et fixées le long de l'axe central (Y1, Y2, Y3) par l'intermédiaire d'un ensemble de cylindres hermétiquement fermés,
- il est divisé en plusieurs rangées m (R1, R2, R3... Rm) disposées perpendiculairement et uniformément le long de la hauteur totale du tambour et délimitées par plusieurs éléments de séparation circulaires (S11, S12 ; S21, S22 ;... Sm) qui sont concentriques avec les bases (1a, 2a, 1b, 2b),
- chaque rangée (R1, R2, R3... Rm) étant pourvue d'un nombre (n) de pales (P) formant un ensemble de pales (Pn),
- chaque pale (P) a un profil en S (d) et la hauteur égale à la hauteur de la rangée associée (R1, R2, R3... Rm) et le profil en S (d) a deux portions, une convexe (d1), respectivement une concave (d2) orientée vers le sens de rotation du tambour, avec la portion convexe (d1) fixée sur au moins un élément de séparation (S11, S12 ; S21, S22 ;... Sm) et orientée vers l'axe central du tambour (Y1, Y2, Y3) et la portion concave (d2) fixée sur au moins un élément de séparation (S11, S12 ; S21, S22 ;... Sm) et orientée vers l'extérieur du tambour,
- chaque pale (P) d'une même rangée étant espacée de 360/n degrés de la pale voisine ; et
- l'ensemble des pales (Pn) de chaque rangée est espacé d'un nombre de degrés supérieur à zéro et inférieur à 360/n par rapport à l'ensemble de la ou des rangées voisines ; et
- au moins un cylindre hermétiquement fermé du tambour respectif (1, 2, 3) positionné dans la direction de l'axe central (Y1, Y2, Y3) dudit au moins un tambour (1, 2, 3) et concentrique à celui-ci, ledit cylindre hermétiquement fermé ayant un diamètre inférieur au diamètre dudit tambour (1, 2, 3), et
- un support vertical (7) muni d'une tête pivotante sur laquelle le tambour (1, 2, 3) est fixé de manière pivotante par rapport audit support vertical (7) et selon la direction de l'axe central (Y1, Y2, Y3) dudit tambour (1, 2, 3).

2. L'éolienne verticale selon la revendication 1, comprenant en outre
- un ensemble configuré pour transformer le mouvement de rotation du tambour (1, 2, 3) en énergie électrique, comprenant :
- un ensemble annulaire comprenant plusieurs bobines circulaires (5, 6), fixé par des moyens élastiques (9a, 9b) sur le côté inférieur du tambour (1, 2, 3) ;
- un ensemble annulaire comprenant plusieurs aimants permanents (4, 4') à polarité modifiée, disposés circulairement, les uns à côté des autres, orientés vers l'ensemble de bobines (5, 6), fixés sur la base inférieure (1b, 2b, 3b) du chaque tambour (1, 2, 3) et concentriques avec ladite base inférieure (1b, 2b, 3b),
- chaque bobine dudit ensemble de bobines (5, 6) étant espacée et concentrique respectivement avec un aimant associé dudit ensemble d'aimants (4, 4').

3. L'éolienne verticale selon la revendication 1, dans laquelle chaque cylindre hermétiquement fermé contient un gaz comprimé non explosif, plus léger que l'air.

4. L'éolienne verticale selon les revendications 1 ou 3, dans laquelle le gaz comprimé non explosif est de préférence de l'argon, du néon ou de l'hélium.

5. L'éolienne verticale selon les revendications 1, 3 ou 4, dans laquelle chaque cylindre hermétiquement fermé est muni de deux soupapes (13a, 13b), pour charger et respectivement pour décharger du gaz.

6. L'éolienne verticale selon l'une quelconque des revendications précédentes, dans laquelle le nombre de rangées m est de préférence un multiple de trois.

7. L'éolienne verticale selon l'une quelconque des revendications précédentes, dans laquelle chaque bobine de l'ensemble de bobines (5, 6) a de préférence le même diamètre que l'aimant associé dudit ensemble d'aimants (4, 4').

8. L'éolienne verticale selon l'une quelconque des revendications précédentes, dans laquelle les moyens élastiques (9a, 9b) sont de préférence des ensembles filetés avec ressorts.

9. L'éolienne verticale selon l'une quelconque des revendications précédentes, dans laquelle les moyens de liaison (10a, 10'a, 10b, 10'b) du tambour (1, 2, 3) sont de préférence un ensemble de paliers oscillants avec guides.

10. L'éolienne verticale selon l'une quelconque des revendications précédentes comprenant un tambour.

11. L'éolienne verticale selon les revendications de 1 à 9, comprenant deux tambours et en plus :
- un châssis (S) ayant un côté frontal, un côté postérieur, deux côtés latéraux, un côté inférieur et un côté supérieur, dans lequel les deux tambours sont montés à l'intérieur du châssis, à distance dudit chaque côté du châssis (S),
- un ensemble déflecteur (D) contenant un premier élément déflecteur (D1) et un second élément déflecteur (D2), fixés verticalement et symétriques l'un par rapport à l'autre, sur le côté frontal du châssis (S) et ayant une hauteur égale à celle du châssis (S), de manière à assurer, lorsqu'il fonctionne, la direction des courants d'air capturés vers l'ensemble de pales (Pn), dans lequel
- l'angle entre le premier élément déflecteur (D1) et le second élément déflecteur (D2) avec le plan de séparation des deux tambours est d'au moins 45 degrés ;
- un élément de guidage (G) fixé verticalement sur le côté postérieur du châssis (S) et ayant une hauteur supérieure à celle du châssis (S), fixé et séparé du châssis (S) par un cadre (8), le plan de l'élément de guidage (G) étant sensiblement le même que le plan de séparation des deux tambours.

12. L'éolienne verticale selon la revendication 11, dans laquelle l'ensemble de pales (Pn), l'ensemble de déflecteurs (D) et l'élément de guidage (G) sont de préférence fabriqués à partir d'un matériau léger, de préférence de l'aluminium, de la fibre de carbone, du bois stratifié, des éléments recyclables tels que des barils, des boîtes de conserve, des plaques, des sous-ensembles.

13. L'éolienne verticale selon les revendications 11 ou 12, dans laquelle l'élément de guidage (G) a une hauteur supérieure d'au moins 20 % à la hauteur du châssis (S), étant biseauté sur le côté frontal supérieur à un angle d'au moins 45 degrés.

14. L'éolienne verticale selon les revendications de 11 à 13, dans laquelle les éléments déflecteurs (D1) et (02) ont des dimensions égales.
